Europäisches Patentamt

European Patent Office

Office européen des brevets

(19)

(11) Veröffentlichungsnummer: **0 316 724**
**A2**

## (12) EUROPÄISCHE PATENTANMELDUNG

(21) Anmeldenummer: 88118615.9

(22) Anmeldetag: 09.11.88

(51) Int. Cl.⁴: **C08F 297/08**

Patentansprüche für folgenden Vertragsstaat: ES.

(30) Priorität: 19.11.87 DE 3739146

(43) Veröffentlichungstag der Anmeldung:
24.05.89 Patentblatt 89/21

(84) Benannte Vertragsstaaten:
AT BE CH DE ES FR GB IT LI NL SE

(71) Anmelder: HOECHST AKTIENGESELLSCHAFT
Postfach 80 03 20
D-6230 Frankfurt am Main 80(DE)

(72) Erfinder: Schreck, Michael, Dr.
Rauenthaler Weg 32
D-6000 Frankfurt am Main 71(DE)
Erfinder: Dorrer, Bernhard, Dr.
Seebachstrasse 24
D-6230 Frankfurt am Main 80(DE)
Erfinder: Uebe, Rudolf, Dr.
Raiffeisenring 7
D-6238 Hofheim am Taunus(DE)

(54) Verfahren zur Herstellung einer Polypropylen-Formmasse.

(57) Ein Propylen-Blockcopolymer mit hohem Comonomergehalt wird erhalten, wenn man die zweite Polymerisationsstufe in einem Monomergemisch durchführt, welches sich im überkritischen Zustand befindet. Das Produkt zeigt geringe Klebrigkeit, weil die Polymerkörner nicht verbacken und nicht an der Reaktorwand haften, und ausgezeichnete Schlagzähigkeit bei sehr tiefen Temperaturen.

EP 0 316 724 A2

## Verfahren zur Herstellung einer Polypropylen-Formmasse

Die vorliegende Erfindung bezieht sich auf ein Verfahren zur Herstellung einer Polypropylen-Formmasse mit guter Steifigkeit, ausgezeichneter Kälteschlagzähigkeit und guten Verarbeitungseigenschaften, wobei in der ersten Stufe ein überwiegend kristallines Propylenhomo- oder -copolymer und in der zweiten Stufe ein statistisches Copolymer von Propylen mit Ethylen und gegebenenfalls einem zweiten 1-Olefin sowie ein teilweise kristallines Polymer des zweiten 1-Olefins erzeugt wird.

Es ist bekannt, mit Hilfe von Ziegler-Natta-Katalysatoren in einer mehrstufigen Polymerisation ein Polymer mit verbesserter Schlagzähigkeit, insbesondere bei niedrigen Temperaturen, herzustellen, wobei die ausgezeichnete Härte des Polypropylens weitgehend erhalten bleibt. Polymere dieses Typs sind eine innige Mischung der verschiedenen Komponenten und werden allgemein Blockcopolymere genannt.

Versucht man Blockcopolymere mit hohem Kautschukgehalt herzustellen, ergeben sich Schwierigkeiten durch Verklumpungen des Polymerpulvers, Verstopfung der Transportwege für das Polymere oder Anhaften des Polymeren an der Reaktorwand.

Bekannt ist ein Verfahren zur Herstellung von alpha-Olefinblockcopolymeren, bei welchem zunächst Propylen homo-oder copolymerisiert wird und das entstandene Polymer nicht mehr als 6 Mol-% Einheiten von anderen Olefinen herrührend enthält, und dann das entstandene Polymer mit Ethylen allein oder mit Propylen und einem anderen Olefin umgesetzt wird. Das Polymere der zweiten Stufe enthält nicht weniger als 10 Mol-% Ethyleneinheiten und die Menge des in der zweiten Stufe erzeugten Polymeren beträgt 10 bis 70 Gew.-%, bezogen auf die Gesamtmenge Polymer in Stufen 1 und 2. Als Katalysator wird eine Titan, Chlor und einen Elektronendonor enthaltende Feststoffkomponente mit einem Porenvolumen von nicht weniger als 0,08 cm$^3$/g, bezogen auf Poren mit einem Radius von 200 bis 15 000 Å, und mit einer mittleren Teilchengröße von 5 bis 100 μm in Kombination mit einer aluminiumorganischen Verbindung eingesetzt (vgl. EP-A 202 946). Allerdings können durch dieses Verfahren die durch die Klebrigkeit des Polymeren bedingten Schwierigkeiten nicht vollständig behoben werden.

Weiterhin ist ein Verfahren zur Herstellung von Blockcopolymeren bekannt, bei welchem in die zweite Polymerisationsstufe eine sauerstoffhaltige Komponente eingeführt wird, um die Klebrigkeit des Polymeren zu verringern (vgl. EP-A 174 863). Eine sauerstoffhaltige Komponente stellt jedoch für die verwendeten Katalysatoren ein Kontaktgift dar und muß daher anschließend vollständig aus dem Prozeßkreislauf entfernt werden, wodurch zusätzliche Verfahrensschritte notwendig werden.

Ebenso ist ein Verfahren bekannt, bei welchem die zweite Polymerisationsstufe in einer Lösung von Ethylen in flüssigem Propylen durchgeführt wird (vgl. US-PS 4,576,994). Dieses Verfahren ist jedoch zur Herstellung von Blockcopolymeren mit einem Gehalt an amorphem Copolymer von mehr als 35 Gew.-% nicht geeignet.

Schließlich ist ein Verfahren zur Herstellung von Blockcopolymeren unter Verwendung eines speziellen, eine organische Siliciumverbindung enthaltenden Trägerkatalysators bekannt (vgl. EP-A 86 300). Die bei diesem Verfahren erhaltenen Blockcopolymeren enthalten weniger als 50 Gew.-% amorphen Propylen-Ethylen-Kautschuk plus kristallines Polyethylen. Gemäß den Beispielen dieser Druckschrift wird die Copolymerisation bei niedrigem Druck durchgeführt. Außerdem werden maximal 32 Gew.-% amorphe Phase in die Blockcopolymeren eingebaut.

Es wurde nun gefunden, daß die Herstellung von Propylen-Blockcopolymeren mit hohen Comonomergehalten ohne Verbacken der Polymerkörner und ohne Anhaften an der Reaktorwand möglich ist, wenn man die zweite Polymerisationsstufe in einem Monomergemisch durchführt, welches sich im überkritischen Zustand befindet.

Somit betrifft die Erfindung das in den Ansprüchen beschriebene Verfahren.

Das erfindungsgemäße Verfahren wird in zwei Stufen durchgeführt, wobei in der ersten Stufe ein hochkristallines Polypropylen oder mit einer geringen Menge eines anderen 1-Olefins als Comonomer modifiziertes Polypropylen und in der zweiten Stufe ein Ethylen-Propylen-Copolymer sowie ein kristallines, zum überwiegenden Teil aus Ethylen gebildetes Polymer hergestellt wird.

Die Durchführung der Polymerisation in der ersten Reaktionsstufe geschieht in der Weise, daß flüssiges Propylen, eine Suspension des festen Katalysatoranteils in einem inerten Suspensionsmittel sowie die weiteren flüssigen Katalysatorbestandteile in ein geeignetes Reaktionsgefäß eingepumpt werden. Dieses Reaktionsgefäß kann ein Autoklav, ein üblicher Reaktionskessel oder ein Rohrreaktor in Schleifenform sein, wobei wie üblich durch eingebaute Rührer oder Umwälzpumpen für eine ausreichende Durchmischung gesorgt wird.

Die Abführung der Reaktionswärme erfolgt durch Mantelkühlung, durch in die Gefäße eingebaute

2

Innenkühlung oder auch durch Siedekühlung.

Das flüssige Propylen selbst, das sowohl als Monomer wie auch als Suspensionsmittel dient, kann wechselnde Mengen an inerten, niedrigsiedenden, gelösten Bestandteilen enthalten, wie z.B. Propan oder Stickstoff, die aber auf die bei diesem Verfahren entstehenden Produkte keinen Einfluß haben.

In der ersten Reaktionsstufe wird eine Reaktionstemperatur von 40 bis 85° C, bevorzugt eine solche von 50 bis 75° C eingehalten.

Die Einstellung der gewünschten Molmasse des Blockcopolymeren erfolgt durch Zugabe von Wasserstof zum flüssigen Propylen. Die zugegebene Menge wird derart eingestellt, daß das in der ersten Reaktionsstufe entstehende Produkt einen Schmelzindex MFI 230/5 von 0,05 bis 300 g/10 min aufweist.

Die Menge des in der ersten Stufe hergestellten Polymeren beträgt, bezogen auf das ganze bei dem Verfahren entstehende feste Polymer, 20 bis 85 Gew.-%, vorzugsweise 20 bis 60 Gew.-%, insbesondere 20 bis 50 Gew.-%.

Falls in der ersten Stufe ein mit geringen Mengen eines anderen 1-Olefins als Comonomer modifiziertes Polypropylen hergestellt werden soll, wird das Comonomere wie die anderen Ausgangsprodukte dosiert. Als andere 1-Olefine kommen Ethylen und einfach ungesättigte Kohlenwasserstoffe mit 4 bis 10 Kohlenstoffatomen in Frage, vorzugsweise Ethylen und Buten, insbesondere Ethylen. Die Konzentration des Ethylens oder 1-Olefins im flüssigen Propylen beträgt dabei 0 bis 5 Mol-%. Das Polymere aus der ersten Stufe besteht zu mindestens 95 Gew.-% aus polymerisiertem Propylen.

Die in der ersten Stufe entstandene Polymersuspension, die im wesentlichen das überwiegend kristalline, isotaktische Polypropylen, das gegebenenfalls mit geringen Mengen eines 1-Olefins modifiziert ist, die aktiven Katalysatorbestandteile, flüssiges Propylen, gewisse Mengen an Wasserstoff sowie gegebenenfalls inerte Anteile enthält, wird nunmehr in die zweite Reaktionsstufe überführt.

Zu Beginn der zweiten Stufe wird Ethylen und gegebenenfalls als weiteres Monomeres ein 1-Olefin mit 4 bis 10 C-Atomen mindestens in einem solchen Maße in die Suspension eingeleitet, daß das Monomergemisch bei der vorgegebenen Reaktionstemperatur nicht mehr im flüssigen Aggregatzustand verbleibt, sondern ein überkritisches Monomergemisch darstellt. Das weitere Monomere kann auch ein konjugiertes Dien wie 1,3-Butadien oder 1,3-Cyclopentadien oder ein nichtkonjugiertes Dien wie 1,4-Hexadien oder Ethylidennorbornen sein. Die zum Erreichen des überkritischen Zustandes nötige Zusammensetzung des Gemisches ist abhängig von der Reaktionstemperatur und variiert von 0 bis 85 % Ethylen, sie beträgt beispielsweise ca. 63 Mol-% Ethylen bei ca. 50° C und ca. 55 Bar, ca. 38 Mol-% Ethylen bei ca. 68° C und ca. 52 bar und ca. 12 Mol-% Ethylen bei ca. 85° C und ca. 49 bar. Die für die jeweilige Temperatur relevanten Daten können im übrigen den einschlägigen Tabellenwerken entnommen werden. Die eventuell vorhandenen weiteren Monomeren sind wegen ihrer geringen Menge von 0 bis 5 Mol-% für das Erreichen des überkritischen Zustandes von geringer Bedeutung. Zweckmäßigerweise führt man die Polymerisation nicht nahe beim kritischen Druck des Monomergemisches durch, sondern fügt soviel Ethylen hinzu, daß der Reaktor der zweiten Stufe bei 3 bis 50 bar, bevorzugt 5 bis 25 bar oberhalb des für die Reaktionstemperatur gültigen kritischen Drucks betrieben wird.

Während der gesamten Polymerisationsdauer in der zweiten Stufe wird durch permanentes Einleiten von Ethylen und/oder eines Propylen/Ethylengemisches, wie es nach der Aufarbeitung der Reaktionslösung anfällt, ein genügend hoher konstanter Druck aufrechterhalten, um den überkritischen Zustand des Monomergemisches zu gewährleisten.

Die Temperatur in der zweiten Polymerisationsstufe beträgt 40 bis 85° C, vorzugsweise 50 bis 70° C.

Der Druck in der zweiten Stufe beträgt 51 bis 100 bar, vorzugsweise 55 bis 80 bar.

Die Verweilzeiten in den einzelnen Reaktionsstufen werden so eingestellt, daß sie in der ersten Stufe 15 bis 180 Minuten, vorzugsweise 20 bis 90 Minuten, und in der zweiten Stufe 10 bis 120 Minuten, vorzugsweise 15 bis 90 Minuten betragen.

Es ist auch möglich, in der zweiten Stufe zusätzlich Aktivator und gegebenenfalls Stereoregulator nachzudosieren. Dies ist vor allem dann vorteilhaft, wenn die Polymerisation in der ersten Stufe bei einem niedrigen Molverhältnis von Aktivator zu Titanverbindung beziehungsweise bei niedriger Aktivatorkonzentration durchgeführt wird.

Falls erforderlich, wird in die zweite Stufe noch zusätzlicher Wasserstoff zur geeigneten Regelung der Molmasse der dort hergestellten Polymeren eingespeist.

Führt man die erste Stufe nicht in einem vollständig flüssigkeitserfüllten Reaktor durch, so hat man auch die Möglichkeit, vor Beginn der zweiten Stufe den Wasserstoffgehalt der Suspension durch Entfernen von Gasgemisch aus der Gasphase herabzusetzen.

Ferner kann man die Reaktivität des Katalysatorsystems vor Beginn der Copolymerisation noch erniedrigen, wenn eine Herabsetzung des Copolymeranteils erwünscht ist. Hierfür eignet sich die Zugabe von Verbindungen, die ein acides Wasserstoffatom enthalten, wie Alkohole, Wasser oder Säuren. Möglich

3

ist auch die Verwendung von Verbindungen, die Carbonylfunktionen enthalten, wie Ester, Ketone und Aldehyde.

In der zweiten Stufe entstehen 28 bis 60, vorzugsweise 30 bis 55 Gew.-%, bezogen auf das gesamte Blockcopolymer, eines nicht kristallinen Ethylen-Propylen-Copolymeren mit einem Ethylengehalt von 20 bis 90, vorzugsweise 40 bis 85 Gew.-%, und 1 bis 25, vorzugsweise 1 bis 18 Gew.-%, bezogen auf das gesamte Blockcopolymer, eines kristallinen Polymers, welches zu mindestens 90, vorzugsweise zu mindestens 95 Gew.-% aus polymerisiertem Ethylen besteht.

Hinsichtlich des verwendeten Katalysatorsystems unterliegt das Verfahren keiner Beschränkung, jedoch wird man zur Polymerisation bevorzugt hochaktive und hochstereospezifische Katalysatorsysteme verwenden. Ein Beispiel ist der folgende Mischkatalysator.

I) Mischkatalysator, welcher durch Inberührungbringen

    (A) des Reaktionsproduktes aus
        (a1) einem Umsetzungsprodukt eines Magnesiumhalogenids mit einem Elektronendonor und
        (a2) Titantetrachlorid mit

    (B) einer halogenfreien aluminiumorganischen Verbindung und
    (C) einer Verbindung aus der Gruppe der aromatischen Carbonsäureester entstanden ist.

Zur Herstellung der Komponente A wird vorzugsweise $MgCl_2$ eingesetzt. Das Reaktionsprodukt al wird in Abwesenheit eines Lösungsmittels durch Mahlen des Magnesiumhalogenids mit der reinen Elektronendonorverbindung hergestellt. Das Molverhältnis des eingesetzten Magnesiumhalogenids zur Elektronendonorverbindung beträgt mehr als 2 : 1. Bevorzugt wird ein Molverhältnis von 3 bis 15 : 1, besonders bevorzugt wird ein Molverhältnis von 4,5 bis 8 : 1. Als Elektronendonorverbindung werden Ester von aromatischen Carbonsäuren wie Benzoesäureethylester, Benzoesäuremethylester, p-Toluylsäureethylester, p-Toluylsäuremethylester, Anissäureethylester oder Anissäuremethylester verwendet.

Sodann wird das Reaktionsprodukt al Magnesiumdihalogenid-Elektronendonor mit dem Titantetrachlorid a2 in Berührung gebracht. Das Inberührungbringen erfolgt vorzugsweise in einem inerten Kohlenwasserstoffmedium im Temperaturbereich von -50 °C bis 150 °C, vorzugsweise 20 °C bis 100 °C. Es folgt nun ein Auswaschen des überschüssigen nicht gebundenen Titantetrachlorids mit einem inerten Kohlenwasserstoff. Bei dem mit Titantetrachlorid (a2) umgesetzten Magnesiumhalogenid-Elektronendonor-Komplex a1 liegt das Verhältnis Mg/Ti vorzugsweise im Bereich von 3 bis 40 : 1, besonders vorteilhaft im Bereich von 10 bis 30 : 1. Das Inberührungbringen der Komponenten a1 und a2 zur Herstellung der titanchloridhaltigen Mischkatalysatorkomponente A kann auch durch Trockenmahlen oder Mahlen in einem Kohlenwasserstoff erfolgen. Das Inberührungbringen erfolgt über einen Zeitraum von 10 bis 600 min, vorzugsweise 50 bis 300 min.

Als halogenfreie aluminiumorganische Verbindung (Komponente b) eignen sich vor allem Aluminiumalkyle der Formel $AlR_3$, wobei R einen Alkylrest mit 1 bis 10 Kohlenstoffatomen bedeutet, wie z.B. Aluminiumtrimethyl, Aluminiumtriethyl, Aluminiumtriisobutyl.

Die Mischkatalysatorkomponente C besteht aus einem Stereoregulator, der ausgewählt wird aus der Gruppe der aromatischen Carbonsäureester. Von den aromatischen Carbonsäureestern werden bevorzugt verwendet Methylbenzoat, Ethylbenzoat, p-Toluylsäureethylester, p-Toluylsäuremethylester, Anissäureethylester und Anissäuremethylester.

Die Menge an Katalysatorkomponente C richtet sich nach der Menge an Katalysatorkomponente B. Das Molverhältnis Komponente B zu Komponente C soll größer als 1 : 1, vorzugsweise 1,5 : 1 bis 15 : 1 sein.

Weiterhin ist beispielsweise auch ein Katalysatorsystem geeignet, bestehend aus den folgenden Komponenten (A), (B) und (C):

    (A) einer festen Titan-Katalysatorkomponente, enthaltend Magnesium, Titan, Halogen und einen Ester, ausgewählt unter Estern der Polycarbonsäuren und Estern von Polyhydroxyverbindungen, wobei die Katalysatorkomponente erhalten wird durch Inkontaktbringen einer Lösung (i) einer Magnesiumverbindung mit (ii) einer Titanverbindung in flüssigem Zustand, ume in festes Produkt zu bilden. Dabei wird die Reaktion der Bildung des festen Produkts durchgeführt in Gegenwart von (D) zumindest einem Elektronendonor, ausgewählt unter Monocarbonsäureestern, aliphatischen Carbonsäuren, Carbonsäureanhydriden, Ketonen, aliphatischen Äthern, aliphatischen Carbonaten, eine Alkoxygruppe enthaltenden Alkoholen, eine Aryloxygruppe enthatenen Alkoholen, Organosiliciumverbindungen mit einer Si-O-C-Bindung und Organophosphorverbindungen mit einer P-O-C-Bindung. Während oder nach der Bildung des festen Produkts wird dieses in Kontakt gebracht mit (E) einem Ester, ausgewählt unter Estern von Polycarbonsäuren und Estern von Polyhydroxyverbindungen,

(B) einer organometallischen Verbindung eines Metalls der Gruppen I bis III des Periodensystems und

(C) einer Organosiliciumverbindung mit einer Si-O-C-Bindung oder Si-N-C-Bindung.

Das Katalysatorsystem ist dadurch gekennzeichnet, daß die Titanverbindung (ii) eine vierwertige Titanverbindung der Formel

$$Ti(OR)_g X_{4-g}$$

ist, worin R eine Kohlenwasserstoffgruppe bedeutet, X ein Halogenatom bedeutet und g eine Zahl ist, darstellt durch $0 < g < 4$.

Der Ester der Polyhydroxyverbindungen ist ausgewählt unter Estern gebildet zwischen $C_6$-$C_{16}$-aromatischen Polyhydroxyverbindungen und $C_1$-$C_{12}$-aliphatischen Carbonsäuren.

Der Elektronendonor (D) wird ausgewählt unter $C_1$-$C_{20}$-Monocarbonsäureestern, $C_1$-$C_{20}$-aliphatischen Carbonsäuren, $C_4$-$C_{20}$-Carbonsäureanhydriden, $C_3$-$C_{20}$-Ketonen, $C_2$-$C_{16}$-aliphatischen Äthern, $C_3$-$C_{20}$-aliphatischen Carbonaten, eine $C_3$-$C_{20}$-Alkoxygruppe enthaltenden Alkoholen, eine $C_3$-$C_{20}$-Aryloxygruppe enthaltenden Alkoholen, Organosiliciumverbindungen mit einer Si-O-C-Bindung, worin die organische Gruppe 1 bis 10 Kohlenstoffatome aufweist, und Organophosphorverbindungen mit einer P-O-C-Bindung, worin die organische Gruppe 1 bis 10 Kohlenstoffatome aufweist.

Die organometallische Verbindung (B) ist eine Organoaluminiumverbindung, insbesondere eine Trialkylaluminiumverbindung, ganz besonders Triethylaluminium.

Die Organosiliciumverbindung (C) stellt eine Verbindung der Formel

$$R_n Si(OR^1)_{4-n}$$

dar, worin R ausgewählt ist unter $C_1$-$C_{10}$-Alkylgruppen, $C_5$-$C_{12}$-Cycloalkylgruppen, $C_6$-$C_{20}$-Arylgruppen, $C_1$-$C_{10}$-Alkenylgruppen, $C_1$-$C_{10}$-Halogenalkylgruppen und $C_1$-$C_{10}$-Aminogruppen, $R^1$ ausgewählt ist unter $C_1$-$C_{10}$-Alkylgruppen, $C_5$-$C_{12}$-Cycloalkylgruppen, $C_6$-$C_{20}$-Arylgruppen, $C_1$-$C_{10}$-Alkenylgruppen und $C_2$-$C_{16}$-Alkoxyalkylgruppen, n eine Zahl ist, darstellt durch $0 < n < 3$, und R-Gruppen oder (4-n)-$OR^1$-Gruppen gleich oder verschieden sein können.

Das erfindungsgemäße Verfahren kann kontinuierlich oder diskontinuierlich durchgeführt werden. Hierbei wird für die erste Stufe die Katalysatorkonzentration im flüssigen Propylen so gewählt, wie für eine Propylen-Homopolymerisation üblich. Die Konzentration der Komponente A beträgt daher 0,001 bis 1 mmol/dm³, bezogen auf Titan, vorzugsweise 0,001 bis 0,1 mmol/dm³.

Die Komponente B wird in einer Konzentration von 0,001 bis 4 mmol/dm³, vorzugsweise 0,1 bis 5 mmol/dm³, und die Komponente C in einer Konzentration von 0,003 bis 12 mmol/dm³, vorzugsweise 0,03 bis 1,2 mmol/dm³, eingesetzt.

Nach Durchführung der zweiten Stufe wird das entstandene Polymer aufgearbeitet. Dies kann dadurch gescheben, daß man das resultierende Gemisch aus Polymer und Monomer in einer oder mehreren Stufen auf Atmosphärendruck entspannt und das restliche Monomer in den Kreislauf zurückführt.

Die Aufarbeitung kann aber auch durch Filtration, Dekantation oder Zentrifugieren in dazu geeigneten, druckfesten Aggregaten geschehen, z.B. in Druckfiltern, Sedimentationsstürmen, Zentrifugen oder Dekantern.

Hierzu ist es vorteilhaft, nach der zweiten Stufe den Druck durch Entspannen und gegebenenfalls Abkühlen soweit abzusenken, daß die Monomermischung wieder unterkritisch wird und sich verflüssigt. Das nach dem Abtrennen der flüssigen Bestandteile gewonnene Polymerpulver wird nunmehr vollständig getrocknet.

Das erfindungsgemäß durchgeführte Verfahren ermöglicht die Herstellung von Blockcopolymeren mit großer Ausbeute und hoher Isotaktizität, wobei sich einerseits Einsparungen bei Apparaten und Verfahrensschritten und andererseits niedrige Katalysatorrestgehalte, niedrige Gehalte an amorphem ataktischem Polypropylen im Produkt und geringer Anfall an wachsartigen Nebenprodukten ergeben.

Das nach dem erfindungsgemäßen Verfahren hergestellte Blockcopolymer weist neben einer ausreichenden Härte eine ausgezeichnete Schlagzähigkeit über einen breiten Temperaturbereich auf, vor allem aber bei tiefen Temperaturen bis -40° C.

Ferner weist das Blockcopolymer einen Schmelzindex MFI 230/5 von 0,05 bis 100 g/10 min auf und enthält 3 bis 80 Gew.-%, vorzugsweise 10 bis 80 Gew.-%, insbesondere 30 bis 75 Gew.-% Ethylen. Seine Härte liegt im allgemeinen zwischen 5 und 90 N/mm², vorzugsweise zwischen 7 und 70 N/mm² und seine Kerbschlagzähigkeit bei 0° C im allgemeinen über 10 mJ/mm² und bei -40° C im allgemeinen über 5 mJ/mm².

Die nach dem erfindungsgemäßen Verfahren erhaltenen Produkte zeichnen sich nicht nur durch überlegene Kälteschlagzähigkeit aus, sondern sie besitzen eine, gemessen an ihrem Gehalt an Ethylen-Propylencopolymer, sehr geringe Klebrigkeit, wie man an der nach DIN 53 492 bestimmten Rieselfähigkeit der einzelnen Polymeren erkennen kann (siehe Tabelle). Sie lassen sich daher ohne verfahrenstechnische Probleme handhaben.

Es wurde im Reaktionsgefäß weder Belagbildung noch anhaftendes Polymer beobachtet.

Das erfindungsgemäße Verfahren ermöglicht somit die Herstellung von nichtkelbrigen Blockcopolymeren mit hohem Copolymergehalt und guten mechanischen Eigenschaften in einem Minimum an Verfahrensschritten.

Für die Weiterverarbeitung wird das erfindungsgemäß gewonnene Blockcopolymer mit den üblichen Zusätzen (Stabilisatoren, Gleitmittel, Füllstoffe, Pigmente etc.) versehen. Es kann entweder in Extrudern oder Knetern in Granulatform überführt oder aber auch aufgrund seiner guten Homogenität ohne vorausgegangene Behandlung in einem Extruder oder Kneter direkt in Pulverform für die Herstellung von Kunststoff-Artikeln verwendet werden. Da seine Schmelzviskosität über den gesamten Bereich variiert werden kann, der für die bekannten Verarbeitungsmethoden benötigt wird, kann es nach allen gängigen Methoden verarbeitet werden. Die dabei hergestellten Artikel besitzen gute Härte hohe Steifigkeit und Elastizität, eine hohe Schlagfestigkeit und Beständigkeit gegen Weißbruch bis zu Temperaturen von -40 °C und zeichnen sich durch gutes Aussehen aus, da so gut wie keine Stippen, Schlieren und Fließmarkierungen auftreten.

Aufgrund seines hohen Copolymergehaltes kann das nach dem erfindungsgemäßen Verfahren erhaltene Polymer auch als Blendkomponente zum Vermischen mit Blockcopolymeren mit niedrigerem Copolymergehalt eingesetzt werden. Es zeichnet sich dadurch aus, daß der Copolymeranteil bereits in dem überwiegend kristallinen Polypropylen fein verteilt vorliegt.

Die Bestimmung der Eigenschaften der gemäß den nachfolgenden Beispielen hergestellten Polymeren wurde im einzelnen nach folgenden Methoden durchgeführt:

Der Schmelzindex MFI 230/5 wurde nach DIN 53 735 gemessen und in g/10 min angegeben.

Die Messung der Kugeldruckhärten erfolgte nach DIN 53 456 an gepreßten Platten, die 3 h bei 140 °C unter $N_2$ getempert, im Laufe von 3 h abgekühlt und zum Temepraturausgleich 24 h bei 23 °C und 50 % rel. Luftfeuchte in einer Klimakammer gelagert worden waren.

Zur Bestimmung der mechanischen Eigenschaften bei tiefen Temperaturen wurde der Schlagbiegeversuch nach DIN 53 753 bei 23 °C, 0 °C und -40 °C am Normkleinstab mit Doppel-V-Einkerbung herangezogen. Die Probekörper wurden gepreßten Platten entnommen, die nach Herstellung 24 h bei 23 °C und 50 % rel. Luftfeuchte gelagert worden waren.

Die Bestimmung des Ethylengehlates erfolgte an 0,1 mm dicken, bei 180 °C gepreßten Folien, wobei die Absorptionsbanden bei den Wellenlängen 13,65 und 13,9 μm zur Auswertung herangezogen wurden.

Die Bestimmung des Anteils an nichtkristallinem Ethylen-Propylen-Copolymer erfolgte durch Umkristallisation der Blockcopolymeren aus einem Benzingemisch und Ausfällen der darin löslichen Anteile mit Aceton.

Die Rieselfähigkeit des Polymers wurde nach DIN 53 492 bestimmt.

**Beispiel 1**

Herstellung einer festen Titan-Katalysatorkomponente

9,52 g (100 mmol) wasserfreies Magnesiumchlorid, 50 cm³ Decan und 46,8 cm³ (300 mmol) 2-Ethylhexylalkohol wurden bei 130 °C 2 h zur Reaktion gebracht, so daß sich eine einheitliche Lösung bildete. Hierzu gab man 2,22 g (15,0 mmol) Phthalsäureanhydrid. Die Mischung wurde 1 h bei 130 °C weiter gerührt, bis sich das Phthalsäureanhydrid gelöst hatte. Die erhaltene Lösung wurde auf Raumtemperatur abgekühlt und im Verlauf 1 h mit 400 cm³ (3,6 mol) bei -20 °C gehaltenem Titantetrachlorid tropfenweise versetzt, worauf die Mischung 4 h auf 110 °C erhitzt wurde. Als die Temperatur von 110 °C erreicht war, wurden 5,36 cm³ (25,0 mmol) Diisobutyl-phthalat zugegeben. Die Mischung wurde weitere 2 h bei dieser Temperatur unter Rühren gehalten. Danach wurde der Ansatz heiß filtriert, um den festen Anteil zu erhalten, der erneut in 400 cm³ Titantetrachlorid suspendiert und 2 h bei 110 °C umgesetzt wurde. Danach wurde der feste Anteil durch Heißfiltrieren gesammelt und mit 110 °C heißem Decan und Hexan gewaschen, bis in den Waschlösemitteln keine freie Titanverbindung mehr nachgewiesen werden konnte.

Die so erhaltene feste Titan-Katalysatorkomponente wurde in Form einer Suspension in Hexan aufbewahrt. Ein Teil der Suspension wurde getrocknet, um die Zusammensetzung des Katalysators zu untersuchen. Die Analyse ergab 2,5 Gew.-% Titan, 56,4 Gew.-% Chlor, 17,5 Gew.-% Magnesium und 21,0 Gew.-% Diisobutylphthalat.

**Polymerisation**

In einem Kessel mit 70 dm³ Inhalt und einem Impeller-Rührer wurden 0,2 bar Wasserstoff und 40 dm³ flüssiges Propylen vorgelegt und nacheinander 200 mmol Triethylaluminium, 40 mmol Diphenyldimethoxysilan und 2,83 cm³ der oben beschriebenen Kontaktsuspension (entspricht 0,05 mmol Ti) eindosiert. Nun wurde der Kesselinhalt auf 70°C aufgeheizt und die Polymerisation des Propylens 90 min durchgeführt. Nach Absenken der Innentemperatur auf 60°C wurden 4,8 kg Ethylen eingeleitet und der Innendruck auf 58 bar eingestellt. Dieser Druck wurde während der restlichen 50 min Reaktionszeit durch Nachspeisen von 1,4 kg Ethylen aufrechtgehalten. Der Kesseldruck wurde auf 15 bar entspannt und der Ansatz abgekühlt, das Polymer abfiltriert und getrocknet. Man erhielt 2,9 kg eines gut rieselfähigen Polymers. Es besitzt die in der Tabelle angegebenen Eigenschaften.

**Beispiel 2**

Die Polymerisation wurde analog Beispiel 1 durchgeführt, jedoch wurde bereits nach 70 min Dauer die Temperatur auf 60°C abgesenkt und Ethylen eingeleitet.
Die Eigenschaften des Polymers sind in der Tabelle angegeben.

**Beispiel 3**

Die Polymerisation wurde analog Beispiel 1 durchgeführt, jedoch dauerte die Copolymerisationsstufe lediglich 30 min. Die Eigenschaften des Polymers sind in der Tabelle angegeben.

**Beispiel 4**

Die Polymerisation wurde analog Beispiel 1 durchgeführt, aber die Copolymerisationsstufe auf 15 min verkürzt. Das Polymer besitzt die in der Tabelle angegebenen Eigenschaften.

**Beispiel 5**

In einem 70 dm³-Rührkessel wurden 120 Ndm³ Wasserstoff und 40 dm³ flüssiges Propylen vorgelegt. Nacheinander wurden 100 mmol Triethylaluminium und 20 mmol Diphenyldimethoxysilan sowie 2,83 cm³ der in Beispiel 1 beschriebenen Suspension der Titankomponente zugegeben. Die Polymerisation des Propylens wurde 90 min bei 70°C durchgeführt, danach die Temperatur auf 60°C abgesenkt und 50 mmol Triethylaluminium nachdosiert. Es wurden 4,9 kg Ethylen eingespeist und der Innendruck auf 59 bar angehoben. Dieser Druck wurde während der Copolymerisation (15 Minuten Dauer) durch Nachspeisen von 0,5 kg Ethylen aufrechterhalten.
Das Gemisch wurde abgekühlt und der Kesseldruck auf 15 bar entspannt, das Polymer abfiltriert und getrocknet. Man erhielt 2,0 kg eines gut rieselfähigen Polymers mit den in der Tabelle angegebenen Eigenschaften.

**Beispiel 6**

**Herstellung der Titankomponente**

530 g wasserfreies Magnesiumchlorid (5,57 mol), weniger als 1 Gew.-% Wasser und 280 g Benzoesäureethylester enthaltend, (1,86 mol) wurden in einer Vibrationsmühle 100 h unter Stickstoff gemahlen. Das verwendete Stahlgefäß hatte einen Inhalt von 5 dm³ und enthielt 15 kg Stahlkugeln aus rostfreien Stahl mit

7

einem Durchmesser von 15 mm. 250 g des gemahlenen Produktes wurden unter Stickstoffatmosphäre in ein 5 dm³-Rührgefäß eingeführt und dort in 3,75 kg TiCl₄ suspendiert. Die Suspension wurde 2 h bei 80° C gerührt und danach bei dieser Temperatur filtriert. Der Rückstand wurde fünfmal mit je 4 dm³ einer hydrierten sauerstofffreien Benzinfraktion bei 80° C gewaschen und in 4 dm³ Benzinfraktion suspendiert. Die Konzentration betrug dann 0,045 mol/dm³, bezogen auf Titan.

**Polymerisation**

In einem 70 dm³-Kessel wurden 130 Ndm³ Wasserstoff und 40 dm³ flüssiges Propylen vorgelegt. Nacheinander wurden nun 60 mmol Triethylaluminium, 16,6 mmol p-Toluolsäuremethylester und 3,4 cm³ der Suspension der Titankomponente zugegeben. Nach 45 min Polymerisation bei 70° C wurde die Temperatur auf 60° C gesenkt und nach Zugabe von 5,6 mmol p-Toluolsäuremethylester 4,6 kg Ethylen bis zu einem Innendruck von 56 bar eingeleitet. Der Innendruck wurde während 75 min durch Einleiten von 1,1 kg Ethylen konstant gehalten.
Die Aufarbeitung ergab 4,4 kg des in der Tabelle beschriebenen Polymers.

**Beispiel 7**

In einem 16n dm³-Kessel wurden 10 dm³ Propylen sowie 8 Ndm³ Wasserstoff vorgelegt und nacheinander 15 mmol Triethylaluminium, 4,2 mmol p-Toluolsäuremethylester und 0,09 cm³ der in Beispiel 6 hergestellten festen Titankomponente zugegeben. Nach Aufheizen auf 70° C und 45 min Polymerisationsdauer wurde der Ansatz auf 60° C gekühlt und nach Zugabe weiterer 1,4 mmol p-Toluolsäuremethylester Ethylen bis zu einem Überdruck von 65 bar eingeleitet. Die Polymerisation wurde weitere 75 min unter ständigem Nachspeisen von Ethylen fortgesetzt und danach abgebrochen. Man erhielt 2,05 kg Polymer.
Die Eigenschaften des Produktes sind in der Tabelle beschrieben.

**Vergleichsbeispiel A**

Mit dem im Beispiel 6 beschriebenen Katalysatorsystem wurde eine Copolymerisation nach US-PS 4,576,994 durchgeführt. In einem 70 dm³-Kessel wurden 40 dm³ flüssiges Propylen und 21 Ndm³ Wasserstoff vorgelegt und nacheinander 60 mmol Triethylaluminium, 16 mmol p-Toluolsäuremethylester und 0,15 mmol der festen Katalysatorkomponente zugegeben. Die Homopolymerisation erfolgte bei 70° C innerhalb von 60 min. Danach wurde Ethylen bis zu einem Kesseldruck von 36,1 bar eingeleitet und eine weitere Stunde polymerisiert. Nach Beendigung der Reaktion mußte der Reaktor geöffnet und das Produkt mechanisch von den Wänden entfernt werden. Man erhielt 6,10 kg eines zusammengebackenen Polymers, das nicht mehr rieselfähig war. Es enthielt 6,2 Gew.-% kristallines Polyethylen und 51,8 Gew.-% Ethylen-Propylen-Kautschuk.

**Vergleichsbeispiel B**

Die Polymerisation wurde in zwei hintereinander verbundenen 40 dm³-Kesseln durchgeführt. Alle Komponenten außer dem Ethylengas wurden in den ersten Kessel eingespeist, wobei das in Beispiel 6 beschriebene Katalysatorsystem zur Anwendung kam. Es kamen zum Einsatz: 41 dm³/h flüssiges Propylen, 5,1 Ndm³/h Wasserstoff, 5,1 dm³/h der in Beispiel 6 beschriebenen Suspension der Titankomponente, 1,8 dm³/h Aluminiumtriethyl, 0,54 dm³/h p-Toluylsäuremethylester, beides in einr Konzentration von 50 mmol/dm³ in einer Benzinfraktion sowie 3,5 m³/h Ethylen. In dem ersten Kessel stellte sich ein Druck von 43,1 bar (Überdruck), im zweiten ein Druck von 42,9 bar (Überdruck) ein. Die Gasanalyse zeigte 37 Vol-% Ethylen im zweiten Kessel, entsprechend einem Partialdruck von 16,3 bar absolut bzw. einer Konzentration von ca. 24 Mol-%. 6,7 kg/h festes und etwa 230 g/h lösliches Produkt wurden gewonnen.

Tabelle

| | MFI 230/15 [g/10 min] | Ethylengehalt [Gew.-%] | Kugeldruckhärte [N/mm$^2$] | Rieselfähigkeit [s] | Schlagbiegeversuch [mJ/mm$^2$] | |
|---|---|---|---|---|---|---|
| | | | | | 0 °C | -40 °C |
| Beispiel 1 | 0,6 | 59 | 9 | 31 | o. Br. | o. Br. |
| Beispiel 2 | 0,4 | 60 | 8 | 34 | o. Br. | o. Br. |
| Beispiel 3 | 0,55 | 50 | 19 | 26 | o. Br. | 46 |
| Beispiel 4 | 7 | 33 | 33 | 17 | 45 | 14 |
| Beispiel 5 | 14 | 31 | 36 | 15 | 40 | 10 |
| Beispiel 6 | 31 | 27 | 45 | 23 | 21 | 7 |
| Beispiel 7 | 1,6 | 39 | 28 | 26 | 42 | 12 |
| Vergleichsbeispiel A | 7,7 | 32 | 37 | nicht rieselfähig | 35 | 9 |
| Vergleichsbeispiel B | 4,1 | 14 | 55 | 43 | 18 | 6 |

o. Br. = ohne Bruch des Prüfkörpers bei 60 mJ/mm$^2$

**Ansprüche**

1. Verfahren zur Herstellung einer Polypropylen-Formmasse, bestehend aus
(1) 20 bis 85 Gew.-% eines kristallinen Polymers, welches zu mindestens 95 Gew.-% aus polymerisiertem Propylen besteht,
(2) 28 bis 60 Gew.-% eines nicht kristallinen Ethylen-Propylen-Copolymeren mit einem Ethylengehalt von 20 bis 90 Gew.-%,
(3) 1 bis 25 Gew.-% eines kristallinen Polymers, welches zu mindestens 90 Gew.-% aus polymerisiertem Ethylen besteht,
wobei man zunächst in einer oder mehreren Stufen in flüssigem Propylen bei einer Verweilzeit von 15 bis 180 Minuten, einem Druck von 12 bis 49 bar und einer Temperatur von 40 bis 85 °C das Polymer (1) und in einer zweiten Stufe bei einer Verweilzeit von 10 bis 120 Minuten, einem Druck von 51 bis 100 bar und einer Temperatur von 40 bis 85 °C in Gegenwart von Ethylen die Polymeren (2) und (3) herstellt, dadurch gekennzeichnet,
daß das Ethylen in mindestens einer solchen Menge in die das Polymer (1) enthaltende Suspension eingeleitet wird, daß das Monomerengemisch den flüssigen Aggregatzustand verläßt und in einen überkritischen Zustand übergeht.

2. Verfahren nach Anspruch 1, dadurch gekennzeichnet, daß bei der Herstellung der Polymeren (1) und (2) bis zu 5 Mol-% eines 1-Olefins mit 4 bis 10 C-Atomen zusätzlich eingesetzt werden.

3. Polypropylen-Formmasse, hergestellt nach dem Verfahren nach Anspruch 1.

4. Verwendung der nach Anspruch 1 hergestellten Polypropylen-Formmasse zur Herstellung von Formkörpern.

5. Verwendung der nach Anspruch 2 hergestellten Polypropylen-Formmasse zur Herstellung von Formkörpern.

Patentansprüche für folgenden Vertragsstaat: ES

1. Verfahren zur Herstellung einer Polypropylen-Formmasse, bestehend aus
(1) 20 bis 85 Gew.-% eines kristallinen Polymers, welches zu mindestens 95 Gew.-% aus polymerisiertem Propylen besteht,
(2) 28 bis 60 Gew.-% eines nicht kristallinen Ethylen-Propylen-Copolymeren mit einem Ethylengehalt von 20 bis 90 Gew.-%,
(3) 1 bis 25 Gew.-% eines kristallinen Polymers, welches zu mindestens 90 Gew.-% aus polymerisiertem Ethylen besteht,
wobei man zunächst in einer oder mehreren Stufen in flüssigem Propylen bei einer Verweilzeit von 15 bis 180 Minuten, einem Druck von 12 bis 49 bar und einer Temperatur von 40 bis 85°C das Polymer (1) und in einer zweiten Stufe bei einer Verweilzeit von 10 bis 120 Minuten, einem Druck von 51 bis 100 bar und einer Temperatur von 40 bis 85°C in Gegenwart von Ethylen die Polymeren (2) und (3) herstellt, dadurch gekennzeichnet,

daß das Ethylen in mindestens einer solchen Menge in die das Polymer (1) enthaltende Suspension eingeleitet wird, daß das Monomerengemisch den flüssigen Aggregatzustand verläßt und in einen überkritischen Zustand übergeht.

2. Verfahren nach Anspruch 1, dadurch gekennzeichnet, daß bei der Herstellung der Polymeren (1) und (2) bis zu 5 Mol-% eines 1-Olefins mit 4 bis 10 C-Atomen zusätzlich eingesetzt werden.